# EUROPEAN PATENT SPECIFICATION

(11) **EP 3 974 160 B1**
(45) Date of publication and mention of the grant of the patent: **07.05.2025**
(21) Application number: 20808626.4
(22) Date of filing: 03.03.2020
(51) Int. Cl.: B29C 64/259, B29C 64/124, B33Y 30/00, B33Y 70/00

(54) **RAPID PHOTOCURING 3D PRINTER MATERIAL BOX AND 3D PRINTER**
BOX FÜR SCHNELLES LICHTHÄRTENDES 3D-DRUCKERMATERIAL UND 3D-DRUCKER
BOÎTE DE MATÉRIAU POUR IMPRIMANTE 3D À PHOTODURCISSEMENT RAPIDE ET IMPRIMANTE 3D

(30) Priority: 23.05.2019 CN 201910432608
(43) Date of publication of application: 30.03.2022
(73) Proprietor: Shining 3D Tech Co., Ltd., Hangzhou, Zhejiang 311258 (CN)
(72) Inventor: PANG, Bo, Hangzhou, Zhejiang 311258 (CN)
(74) Representative: Novagraaf Group
(86) International application number: PCT/CN2020/077633
(87) International publication number: WO 2020/233188

(56) References cited:
- CN-A- 106 113 499
- CN-A- 106 273 512
- CN-A- 106 273 516
- CN-A- 110 027 209
- CN-U- 205 573 042
- CN-U- 205 573 042
- CN-U- 208 359 475
- US-A1- 2018 370 136
- US-A1- 2019 099 948

## Description

### Technical Field

The present invention relates to the field of printers, and particularly to a fast light-curing 3D printer cartridge and a 3D printer.

### Background

As a material commonly used for light-curing printer cartridge designs, PDMS has the advantages of relatively low friction coefficient and relatively good elasticity, oxygen permeability and oxygen storage rate. With these characteristics, PDMS may provide a relatively high release property in a cartridge design with a totally enclosed system. However, in the totally enclosed PDMS cartridge design, PDMS cannot keep supplementing oxygen continuously, and a low release force usually exists in first multiple printed layers only. A drawing force between the printed layers subsequently formed and the bottom surface of the cartridge increases, resulting in a low printing speed and poor printing effect of a light-curing printer in a conventional art. CN205573042 discloses a light curing 3D printer cartridge according to the preamble of the present claim 1.

### Summary

Objectives of the present invention include, for example, providing a fast light-curing 3D printer cartridge, which has the characteristics that a resin flows back fast, a drawing force between a printed layer and a bottom surface of the cartridge is reduced, the stripping speed is increased, and the printing speed is improved remarkably.

The objectives of the present invention also include providing a 3D printer with high printing speed.

In order to achieve at least one of the above objectives, the following technical solutions are adopted in the examples of the present invention.

The embodiment of the present invention provides a fast light-curing 3D printer cartridge, which includes a resin tank sidewall and a curing inhibitor delivery layer. A bottom of the resin tank sidewall is connected to an upper surface of the curing inhibitor delivery layer to enclose a resin tank. The fast light-curing 3D printer cartridge has a curing inhibitor supply part configured to provide a curing inhibitor for the curing inhibitor delivery layer.

In the present invention, the curing inhibitor supply part is arranged to provide the curing inhibitor for the curing inhibitor delivery layer, and the curing inhibitor keeps entering a resin in the resin tank well and continuously from the curing inhibitor delivery layer. Therefore, the printing speed may be improved remarkably.

The curing inhibitor supply part includes a delivery layer extending part. The delivery layer extending part is formed by the extension of the curing inhibitor delivery layer from the resin tank along the bottom of the resin tank sidewall. That is, the delivery layer extending part is a part of the curing inhibitor delivery layer. In the present invention, the delivery extending part is used as the curing inhibitor supply part and contacts with the air well, and the air freely enters the curing inhibitor delivery layer through the delivery layer extending part and is diffused so as to keep entering the resin in the resin tank well and continuously.

In another implementation mode, the curing inhibitor supply part includes a curing inhibitor supply bin. The curing inhibitor supply bin contacts with the curing inhibitor delivery layer to deliver the curing inhibitor to the curing inhibitor delivery layer. In such case, the curing inhibitor is delivered to the curing inhibitor delivery layer through the curing inhibitor supply bin so as to keep entering the resin in the resin tank well and continuously.

It is to be noted that, in another implementation mode of the present invention, the curing inhibitor supply bin may also contact with the delivery layer extending part to deliver the curing inhibitor through the delivery layer extending part.

Further, the curing inhibitor supply part further includes a pressurization part configured to pressurize and deliver the curing inhibitor to the curing inhibitor delivery layer. The pressurized delivery further ensures that the curing inhibitor is delivered into the resin well.

In the present invention, an oxygen-permeable light-transmitting curing inhibitor distribution layer is further arranged on the upper surface of the curing inhibitor delivery layer of the fast light-curing 3D printer cartridge. The curing inhibitor distribution layer is located in the resin tank.

The curing inhibitor distribution layer of the fast light-curing 3D printer cartridge is an oxygen-permeable light-transmitting fluorine-containing thin film, preferably a Teflon AF 2400 thin film.

The curing inhibitor delivery layer of the fast light-curing 3D printer cartridge is a silicon-based thin film material layer, preferably a PDMS thin film.

Optionally, in another implementation mode of the present invention, the curing inhibitor of the fast light-curing 3D printer cartridge is oxygen or air.

Optionally, in another implementation mode of the present invention, a rigid ultraviolet light-transmitting layer is further arranged on a lower surface of the curing inhibitor delivery layer of the fast light-curing 3D printer cartridge.

In an embodiment of the present invention, the rigid ultraviolet light-emitting layer is arranged to support the curing inhibitor delivery layer. In such case, the curing inhibitor delivery layer is prevented from being deformed under the gravity of the resin or the pressure of the air, the printing error is minor, the accuracy is high, and the printing effect is good.

Optionally, in another implementation mode of the present invention, the ultraviolet light-transmitting layer of the fast light-curing 3D printer cartridge is made of quartz or transparent acrylic.

According to an embodiment of the present invention, a 3D printer is provided, which includes the above-mentioned fast light-curing 3D printer cartridge.

During a 3D printing process of the 3D printer, the resin tank is filled with a resin, the resin contacts with the curing inhibitor delivery layer, and a part of the resin contacting with the curing inhibitor delivery layer may be mixed with oxygen to form an inhibition layer.

According to the fast light-curing 3D printer cartridge provided by the embodiments of the present invention, the oxygen-permeable light-transmitting curing inhibitor delivery layer is arranged at the bottom of the resin tank sidewall to form the resin tank, and the fast light-curing 3D printer cartridge has the curing inhibitor supply part configured to provide the curing inhibitor for the curing inhibitor delivery layer. The curing inhibitor supply part keeps providing the curing inhibitor (e.g., oxygen, air and the like) for the curing inhibitor delivery layer well and continuously such that the curing inhibitor is continuously delivered into the resin tank. A lower surface of a new printed layer contacts with the curing inhibitor when the resin tank is filled with the resin to form a resin layer during a printing process. The resin of the resin layer is partially mixed with oxygen to form an oxygen inhibition phenomenon, and a part of the resin mixed with oxygen does not undergo a curing reaction. Therefore, the lower surface of the new printed layer is unlikely to adhere to the bottom surface of the cartridge, a drawing force between the new printed layer and the bottom surface of the cartridge is low, the resin flows back faster, and the printing speed is improved remarkably. According to the 3D printer provided by the embodiments of present invention, the resin flows back fast, and the printing speed is improved remarkably.

### Brief Description of the Drawings

In order to more clearly illustrate the technical solutions of the examples of the present invention, accompanying drawings to be used in the examples are simply described below. It should be understood that the following accompanying drawings only show some examples of the present invention and thus should not be regarded as limits to the scope defined by the appended claims.
FIG. 1 illustrates a schematic structural diagram of a fast light-curing 3D printer cartridge according to an example of the present invention.
FIG. 2 illustrates another schematic structural diagram of a fast light-curing 3D printer cartridge according to an example which is not in accordance with the present claims.
FIG. 3 illustrates yet another schematic structural diagram of a fast light-curing 3D printer cartridge according to an example of the present invention.
FIG. 4 illustrates a schematic structural diagram of a fast light-curing 3D printer cartridge filled with a resin according to an example of the present invention.

Reference signs: 100-fast light-curing 3D printer cartridge; 101-curing inhibitor delivery layer; 102-resin tank sidewall; 103-curing inhibitor distribution layer; 104-curing inhibitor supply bin; 105-ultraviolet light-transmitting layer; 106-resin tank; 107-delivery layer extending part; 200-resin layer; and 201-inhibition layer.

### Detailed Description of the Embodiment

It should be noted that similar symbols and letters represent similar terms in the following accompanying drawings and thus a certain term, once being defined in one accompanying drawing, is not required to be further defined or explained in the subsequent accompanying drawings.

In the descriptions of the present invention, it is to be noted that orientation or position relationships indicated by terms "center", "top", "bottom", "left", "right", "vertical", "horizontal", "inner", "outer" and the like are orientation or position relationships shown in the accompanying drawings, or orientation or position relationships commonly formed when the product of the present invention is used, or orientation or position relationships commonly understood by those skilled in the art. They are only for easily describing the present invention and simplifying the description rather than indicating or implying that indicated devices or components must be in specific orientations or structured and operated in specific orientations, and thus should not be understood as limits to the present invention. In addition, the terms "first", "second", "third" and the like are used for differentiated description and should not be understood to indicate or imply relative importance.

Moreover, terms "horizontal", "vertical", "pendent" and the like do not represent that a component is required to be absolutely horizontal or pendent, and instead, the component may be slightly inclined. For example, "horizontal" only refers to that the direction is more horizontal relative to "vertical" and does not represent that the structure needs to be completely horizontal, and instead, the structure may be slightly inclined.

In the description of the present invention, it should be noted that unless otherwise explicitly specified or defined, terms "arrange", "mount", "mutually connect" and "connect" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. Those of ordinary skill in the art may understand the specific meanings of the foregoing terms in the present invention according to specific situations.

### Example

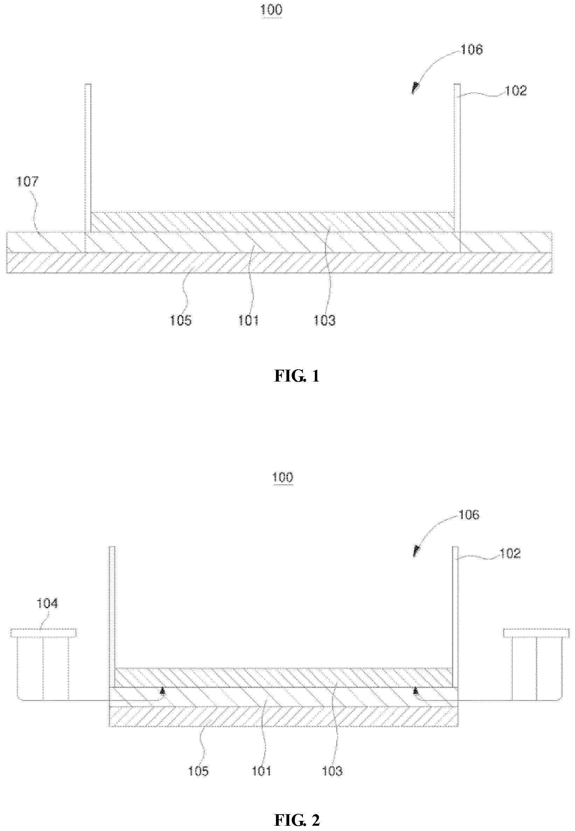

Referring to FIG. 1, the present example provides a fast light-curing 3D printer cartridge 100, which includes a curing inhibitor delivery layer 101, a resin tank sidewall 102, and a curing inhibitor supply part.

Specifically, the curing inhibitor delivery layer 101 is located at a bottom of the resin tank sidewall 102 such that the resin tank sidewall 102 and the curing inhibitor delivery layer 101 enclose an enclosed resin tank 106. The curing inhibitor supply part provides a curing inhibitor (specifically referring to oxygen in the present example, as oxygen may be mixed with a resin to form an oxygen inhibition phenomenon) for the curing inhibitor delivery layer 101. The curing inhibitor keeps entering the resin in the resin tank 106 well and continuously from the curing inhibitor delivery layer 101. A part of the resin forming oxygen inhibition may not be cured. In such case, solid-liquid separation is implemented between the cured resin and the uncured resin, so that the drawing force is reduced remarkably, and the resin flows back faster. Therefore, the printing speed is improved remarkably.

The curing inhibitor delivery layer 101 is made of an oxygen-permeable light-transmitting material. In the present example, any material which has high oxygen permeability, high light transmittance and high mechanical performance and may be formed freely can be selected. The material of the curing inhibitor delivery layer 101 is a silicon-based thin film material layer, including, but not limited to, DowCorning PDMS, which has oxygen permeability of 600 Barrer, UV transmittance of 95% and good mechanical performance and may be formed freely on many surfaces.

In an implementation mode of the present invention, referring to FIG. 1, the curing inhibitor delivery layer 101 extends from the resin tank 106 along the bottom of the resin tank sidewall 102 to form a delivery layer extending part 107. Specifically, the curing inhibitor delivery layer 101 extends from the resin tank 106 along a length and/or width direction of the resin tank 106. The delivery layer extending part 107 is used as the curing inhibitor supply part. The delivery layer extending part 107 extends out from the resin tank 106 and thus may directly contact with the air with a large contact area. The air may freely enter the curing inhibitor delivery layer 101 through the delivery layer extending part 107 so as to be diffused by the curing inhibitor delivery layer 101 to keep entering the resin in the resin tank 106 well and continuously.

In another implementation mode which is not according to the present claims, referring to FIG. 2, the curing inhibitor supply part includes a curing inhibitor supply bin 104. The curing inhibitor supply bin 104 contacts with the curing inhibitor delivery layer 101 to deliver the curing inhibitor to the curing inhibitor delivery layer 101. Therefore, the curing inhibitor may keep entering the resin in the resin tank 106 well and continuously. In the present implementation mode, the curing inhibitor delivery layer 101 may be flush with the resin tank 106, namely not extending out from the resin tank 106.

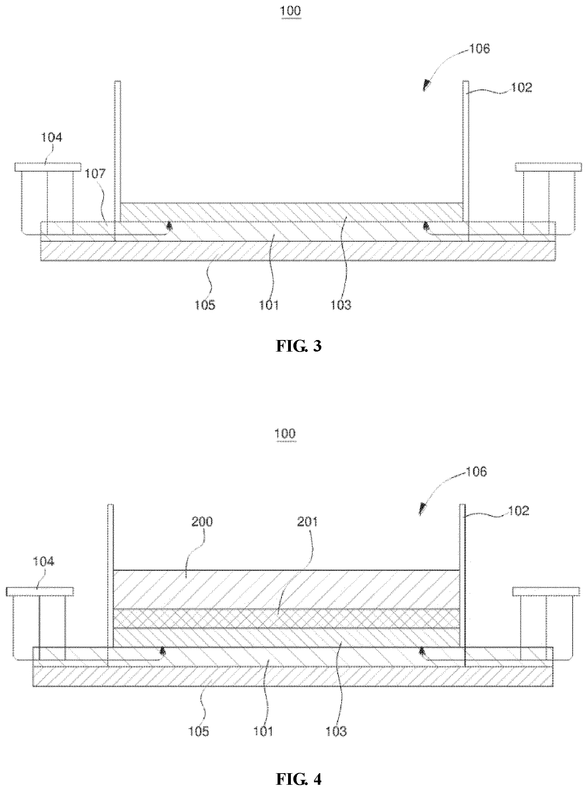

In addition, in yet another implementation mode of the present invention, referring to FIG 3, the curing inhibitor supply part may include both the curing inhibitor supply bin 104 and the delivery layer extending part 107. In such case, the curing inhibitor supply bin 104 directly contacts with the delivery layer extending part 107 and delivers the curing inhibitor.

Furthermore, preferably, the curing inhibitor supply part further includes a pressurization part (not shown in the figure) configured to pressurize and deliver the curing inhibitor to the curing inhibitor delivery layer. The pressurized delivery further ensures that the curing inhibitor is delivered into the resin well. The pressurization part may be arranged in many ways. For example, the delivery layer extending part 107 is sealed, and then oxygen or air is delivered to the sealed delivery layer extending part 107 by the curing inhibitor supply bin 104, thereby delivering the curing inhibitor into the resin well by use of the pressure of the curing inhibitor.

In a practical printing process, referring to FIG. 2, it is necessary to fill the resin tank 106 with a resin to form a resin layer 200. The resin layer 200 directly contacts with the curing inhibitor delivery layer 101. In the present example, the resin of the resin layer 200 is a free radical initiator photosensitive resin.

The resin of the resin layer 200 is partially mixed with the oxygen entering from the curing inhibitor delivery layer 101 to form an oxygen inhibition phenomenon (i.e., an inhibition layer 201). The portion of the resin mixed with the oxygen may not be cured, and the other portion not mixed with the oxygen in the resin layer 200 is cured only on the inhibition layer 201. In such case, solid-liquid separation is implemented between the cured resin and the uncured resin (i.e., the inhibition layer 201). Therefore, the drawing force may be reduced remarkably, the resin flows back faster than before, and the printing speed is improved remarkably.

In addition, according to the present invention, a curing inhibitor distribution layer 103 is arranged on the upper surface of the curing inhibitor delivery layer 101. The curing inhibitor distribution layer 103 is located in the resin tank 106. The curing inhibitor distribution layer 103 diffuses the oxygen in the curing inhibitor delivery layer 101 into the inhibition layer 201 well such that the oxygen keeps entering the resin continuously to form an oxygen inhibition effect.

In the present example, the curing inhibitor distribution layer 103 is also made of an oxygen-permeable light-transmitting material. Any thin film with high oxygen permeability, high chemical resistance and high light transmittance may be used. The curing inhibitor distribution layer 103 is an oxygen-permeable light-transmitting fluorine-containing thin film, including, but not limited to, a DuPont Teflon AF 2400 thin film, which has oxygen permeability of 990 Barrer, good chemical resistance and UV transmittance of 95%.

The curing inhibitor distribution layer 103 is arranged on the upper surface of the curing inhibitor delivery layer 101 such that the oxygen passes through the curing inhibitor delivery layer 101 at first and then enters the curing inhibitor distribution layer 103. The curing inhibitor delivery layer 101 may deliver and store oxygen well. The curing inhibitor distribution layer 103 may diffuse oxygen well into the resin layer 200 evenly to form the oxygen inhibition effect.

In addition, in another implementation mode of the present example, an ultraviolet light-transmitting layer 105 is further arranged on one side of the curing inhibitor delivery layer 101 away from the resin tank sidewall 102. The ultraviolet light-transmitting layer 105 may be made of any material with excellent UV transmittance, which is required to be highly rigid, such as quartz and transparent acrylic. The ultraviolet light-transmitting layer 105 is highly rigid and thus may effectively support the curing inhibitor delivery layer 101, the curing inhibitor distribution layer 103, the inhibition layer 201, the resin layer 200 and the resin tank sidewall 102, and effectively prevent the curing inhibition delivery layer 101 and the curing inhibitor distribution layer 103 from being deformed under the gravity of the resin. In addition, the curing inhibitor distribution layer 103 is arranged on the surface of the curing inhibitor delivery layer 101, and oxygen passes through the curing inhibitor delivery layer 101 at first and then enters the curing inhibitor distribution layer 103. Therefore, the condition that the curing inhibitor distribution layer 103 is deformed under the pressure of oxidation may be alleviated effectively. Furthermore, the stability and precision between each layered structure in the present invention are ensured, and the error may further be effectively controlled within 10 micrometers.

A preparation method of a fast light-curing 3D printer cartridge 100 is as follows. The ultraviolet light-transmitting layer 105 is taken as a bottom layer. The curing inhibitor delivery layer 101 is formed on the surface of the ultraviolet light-transmitting layer 105. Before the curing inhibitor delivery layer 101 is completely formed, the resin tank sidewall 102 is connected with the curing inhibitor delivery layer 101 to form the enclosed resin tank 106. In addition, before the curing inhibitor delivery layer 101 is completely formed, the curing inhibitor distribution layer 103 is connected with the curing inhibitor delivery layer 101, so as to improve the chemical resistance of the resin tank and prolong the service life of the resin tank, and such that the curing inhibitor supply part contacts with the curing inhibitor delivery layer 101. After the resin tank 106 is manufactured, the resin layer 200 is formed by filling the resin tank 106 with a resin, and printing is started. In the whole printing process, the curing inhibitor (oxygen) in the curing inhibitor supply bin 104 keeps entering the curing inhibitor delivery layer 101 continuously through a portion of the curing inhibitor delivery layer 101 contacting with the air, and then is distributed into the resin of the resin layer 200 by the curing inhibitor distribution layer 103, so as to form an oxygen inhibition effect at a portion of the resin layer 200 close to the curing inhibitor distribution layer 103.

In addition, an embodiment of the present invention also provides a 3D printer, which includes the fast light-curing 3D printer cartridge 100 according to the present claim 1. During a 3D printing process of the 3D printer, the resin tank 106 is filled with a resin to form the resin layer 200, the resin in the resin layer 200 contacts with the curing inhibitor delivery layer 101, and a portion of the resin contacting with the curing inhibitor delivery layer may be mixed with oxygen to form an inhibition layer 201. Designs of other parts of the 3D printer may refer to an ordinary light-curing printer, and will not be elaborated in the embodiment of the present invention. According to the 3D printer, the resin flows back fast, and the printing speed is improved remarkably.

In summary, according to the fast light-curing 3D printer cartridge provided by the embodiments of the present invention, the oxygen-permeable light-transmitting curing inhibitor delivery layer is arranged at the bottom of the resin tank sidewall to form the resin tank, and the fast light-curing 3D printer cartridge has the curing inhibitor supply part configured to provide the curing inhibitor for the curing inhibitor delivery layer. The curing inhibitor supply part may keep providing the curing inhibitor (e.g., oxygen, air and the like) for the curing inhibitor delivery layer well and continuously, such that the curing inhibitor is continuously delivered into the resin tank. The resin between the lower surface of a new printed layer and the bottom surface of the cartridge contacts with the curing inhibitor during printing. Part of the resin is mixed with oxygen to form an oxygen inhibition phenomenon and has no curing reactions. Therefore, the lower surface of the new printed layer is unlikely to adhere to the bottom surface of the cartridge, a drawing force between the new printed layer and the bottom surface of the cartridge is low, the resin flows back faster, and the printing speed is improved remarkably. According to the 3D printer provided by the present invention, the resin flows back fast, and the printing speed is improved remarkably.

## Claims

1. A fast light-curing 3D printer cartridge (100), comprising a resin tank sidewall (102) and a curing inhibitor delivery layer (101), wherein a bottom of the resin tank sidewall (102) is connected to an upper surface of the curing inhibitor delivery layer (101) to enclose a resin tank (106); and the fast light-curing 3D printer cartridge (100) has a curing inhibitor supply part configured to provide a curing inhibitor for the curing inhibitor delivery layer (101); wherein the curing inhibitor supply part comprises a delivery layer extending part (107); the delivery layer extending part (107) is formed by the extension of the curing inhibitor delivery layer (101) from the resin tank (106) along the bottom of the resin tank sidewall (102); and the delivery layer extending part (107) contacts with the air;
**characterised in that** an oxygen-permeable light-transmitting curing inhibitor distribution layer (103) is further arranged on the upper surface of the curing inhibitor delivery layer (101); and the curing inhibitor distribution layer (103) is located in the resin tank; and the curing inhibitor distribution layer (103) is an oxygen-permeable light-transmitting fluorine-containing thin film; and the curing inhibitor delivery layer is a silicon-based thin film material layer.

2. The fast light-curing 3D printer cartridge (100) according to claim 1, wherein the curing inhibitor supply part comprises a curing inhibitor supply bin (104); and the curing inhibitor supply bin (104) contacts with the curing inhibitor delivery layer (101) to deliver the curing inhibitor to the curing inhibitor delivery layer (101).

3. The fast light-curing 3D printer cartridge (100) according to claim 1, wherein the curing inhibitor supply part further comprises a pressurization part configured to pressurize and deliver the curing inhibitor to the curing inhibitor delivery layer (101).

4. The fast light-curing 3D printer cartridge (100) according to claim 1, wherein the curing inhibitor distribution layer (103) is a Teflon AF 2400 thin film.

5. The fast light-curing 3D printer cartridge (100) according to claim 1, wherein the curing inhibitor delivery layer (101) is a PDMS thin film.

6. The fast light-curing 3D printer cartridge (100) according to claim 1, wherein a rigid ultraviolet light-transmitting layer is further arranged on a lower surface of the curing inhibitor delivery layer (101).

7. The fast light-curing 3D printer cartridge (100) according to claim 6, wherein the ultraviolet light-transmitting layer is made of quartz or transparent acrylic.

8. A 3D printer, comprising the fast light-curing 3D printer cartridge (100) as claimed in any one of claims 1-7.

## Patentansprüche

1. Schnell lichthärtende 3D-Druckerpatrone (100), umfassend eine Harztankseitenwand (102) und eine Härtungsinhibitorabgabeschicht (101), wobei eine Unterseite der Harztankseitenwand (102) mit einer oberen Oberfläche der Härtungsinhibitorabgabeschicht (101) verbunden ist, um einen Harztank (106) einzuschließen; und die schnell lichthärtende 3D-Druckerpatrone (100) einen Härtungsinhibitorzufuhrteil aufweist, der konfiguriert ist, um einen Härtungsinhibitor für die Härtungsinhibitorabgabeschicht (101) bereitzustellen; wobei der Härtungsinhibitorzufuhrteil einen die Abgabeschicht verlängernden Teil (107) umfasst; der die Abgabeschicht verlängernde Teil (107) durch die Verlängerung der Härtungsinhibitorabgabeschicht (101) von dem Harztank (106) entlang der Unterseite der Harztankseitenwand (102) ausgebildet wird; und der die Abgabeschicht verlängernde Teil (107) mit der Luft in Kontakt kommt;
**dadurch gekennzeichnet, dass** eine sauerstoffpermeable lichtdurchlässige Härtungsinhibitorverteilungsschicht (103) ferner auf der oberen Oberfläche der Härtungsinhibitorabgabeschicht (101) angeordnet ist; und die Härtungsinhibitorverteilungsschicht (103) sich in dem Harztank befindet; und die Härtungsinhibitorverteilungsschicht (103) ein sauerstoffpermeabler lichtdurchlässiger fluorhaltiger Dünnfilm ist; und die Härtungsinhibitorabgabeschicht eine Dünnfilmmaterialschicht auf Siliziumbasis ist.

2. Schnell lichthärtende 3D-Druckerpatrone (100) nach Anspruch 1, wobei der Härtungsinhibitorzufuhrteil einen Härtungsinhibitorzufuhrbehälter (104) umfasst; und der Härtungsinhibitorzufuhrbehälter (104) mit der Härtungsinhibitorabgabeschicht (101) in Kontakt kommt, um den Härtungsinhibitor an die Härtungsinhibitorabgabeschicht (101) abzugeben.

3. Schnell lichthärtende 3D-Druckerpatrone (100) nach Anspruch 1, wobei der Härtungsinhibitorzufuhrteil ferner einen Druckbeaufschlagungsteil umfasst, der konfiguriert ist, um den Härtungsinhibitor mit Druck zu beaufschlagen und an die Härtungsinhibitorabgabeschicht (101) abzugeben.

4. Schnell lichthärtende 3D-Druckerpatrone (100) nach Anspruch 1, wobei die Härtungsinhibitorverteilungsschicht (103) ein Teflon AF 2400-Dünnfilm ist.

5. Schnell lichthärtende 3D-Druckerpatrone (100) nach Anspruch 1, wobei die Härtungsinhibitorabgabeschicht (101) ein PDMS-Dünnfilm ist.

6. Schnell lichthärtende 3D-Druckerpatrone (100) nach Anspruch 1, wobei auf einer unteren Oberfläche der Härtungsinhibitorabgabeschicht (101) ferner eine starre ultraviolettlichtdurchlässige Schicht angeordnet ist.

7. Schnell lichthärtende 3D-Druckerpatrone (100) nach Anspruch 6, wobei die ultraviolettlichtdurchlässige Schicht aus Quarz oder transparentem Acryl besteht.

8. 3D-Drucker, umfassend die schnell lichthärtende 3D-Druckerpatrone (100) nach einem der Ansprüche 1 bis 7.

## Revendications

1. Cartouche d'imprimante 3D à photopolymérisation rapide (100), comprenant une paroi latérale de réservoir de résine (102) et une couche de transport d'inhibiteur de polymérisation (101), dans laquelle une partie inférieure de la paroi latérale de réservoir de résine (102) est reliée à une surface supérieure de la couche de transport d'inhibiteur de polymérisation (101) afin d'enfermer un réservoir de résine (106) ; et la cartouche d'imprimante 3D à photopolymérisation rapide (100) a une partie d'alimentation en inhibiteur de polymérisation conçue pour fournir un inhibiteur de polymérisation à la couche de transport d'inhibiteur de polymérisation (101) ; dans laquelle la partie d'alimentation en inhibiteur de polymérisation comprend une partie d'extension de couche de transport (107) ; la partie d'extension de couche de transport (107) est formée par l'extension de la couche de transport d'inhibiteur de polymérisation (101) à partir du réservoir de résine (106) le long de la partie inférieure de la paroi latérale de réservoir de résine (102) ; et la partie d'extension de couche de transport (107) est en contact avec l'air ;
**caractérisée en ce qu'**une couche de distribution d'inhibiteur de polymérisation (103) perméable à l'oxygène et transmettant la lumière est en outre disposée sur la surface supérieure de la couche de transport d'inhibiteur de polymérisation (101) ; et la couche de distribution d'inhibiteur de polymérisation (103) est située dans le réservoir de résine ; et la couche de distribution d'inhibiteur de polymérisation (103) est un film mince contenant du fluor, perméable à l'oxygène et transmettant la lumière ; et la couche de transport d'inhibiteur de polymérisation est une couche de matériau de film mince à base de silicium.

2. Cartouche d'imprimante 3D à photopolymérisation rapide (100) selon la revendication 1, dans laquelle la partie d'alimentation en inhibiteur de polymérisation comprend un bac d'alimentation en inhibiteur de polymérisation (104) ; et le bac d'alimentation en inhibiteur de polymérisation (104) entre en contact avec la couche de transport d'inhibiteur de polymérisation (101) afin de transporter l'inhibiteur de polymérisation à la couche de transport d'inhibiteur de polymérisation (101).

3. Cartouche d'imprimante 3D à photopolymérisation rapide (100) selon la revendication 1, dans laquelle la partie d'alimentation en inhibiteur de polymérisation comprend en outre une partie de pressurisation conçue pour pressuriser et transporter l'inhibiteur de polymérisation à la couche de transport d'inhibiteur de polymérisation (101).

4. Cartouche d'imprimante 3D à photopolymérisation rapide (100) selon la revendication 1, dans laquelle la couche de distribution d'inhibiteur de polymérisation (103) est un film mince en Téflon AF 2400.

5. Cartouche d'imprimante 3D à photopolymérisation rapide (100) selon la revendication 1, dans laquelle la couche de transport d'inhibiteur de polymérisation (101) est un film mince en PDMS.

6. Cartouche d'imprimante 3D à photopolymérisation rapide (100) selon la revendication 1, dans laquelle une couche transmettant la lumière ultraviolette rigide est en outre disposée sur une surface inférieure de la couche de transport d'inhibiteur de polymérisation (101).

7. Cartouche d'imprimante 3D à photopolymérisation rapide (100) selon la revendication 6, dans laquelle la couche transmettant la lumière ultraviolette est faite de quartz ou d'acrylique transparent.

8. Imprimante 3D, comprenant la cartouche d'imprimante 3D à photopolymérisation rapide (100) selon l'une quelconque des revendications 1 à 7.
